# EUROPEAN PATENT SPECIFICATION

(11) **EP 2 229 755 B1**
(45) Date of publication and mention of the grant of the patent: **19.12.2012**
(21) Application number: 09740545.0
(22) Date of filing: 18.08.2009
(51) Int. Cl.: H04L 12/28, G06Q 30/00, G07G 1/00

(54) **SYSTEM, METHOD AND SOFTWARE FOR HOUSE AUTOMATION CONFIGURATION AT POINT OF SALE OF AN AUTOMATION DEVICE**
SYSTEM, VERFAHREN UND SOFTWARE FÜR EINE HAUSHALTSAUTOMATISIERUNGSKONFIGURATION AM VERKAUFSPUNKT EINER AUTOMATISIERUNGSVORRICHTUNG
SYSTÈME, PROCÉDÉ ET LOGICIEL POUR LA CONFIGURATION DOMOTIQUE AU NIVEAU D'UN POINT DE VENTE D'UN DISPOSITIF D'AUTOMATISATION

(30) Priority: 29.09.2008 NO 20084122
(43) Date of publication of application: 22.09.2010
(73) Proprietor: Verdisikring Safety As, 5522 Haugesund (NO)
(72) Inventor: LANDA, Arne, N-5514 Haugesund (NO)
(74) Representative: Valea AB
(86) International application number: PCT/NO2009/000293
(87) International publication number: WO 2010/036120

(56) References cited:
- EP-A- 1 708 118
- WO-A-2005/109361
- US-B1- 6 686 838

## Description

### Technical field

The present invention relates to a method, system and software for house automation, in particular for configuration of such systems at the point of sale.

### Background

House automation is a wide area of automation techniques for the comfort and security of residents and workers in homes, public buildings and office buildings. Building automation can include functions for light and climate control, control of doors and window shutters, security and surveillance systems are used in home automation. Moreover, additional functions can include:
- "telecare", such as surveillance and caring functions for babies, children, elderly and disabled persons,
- the control of multimedia information or entertainment,
- pet feeding and
- other more homely functions than those used in office.

House automation systems, including alarms and security sensors, e.g. for burglary, fire or water leakages, have traditionally been installed and configured by professionals.

A system consists of various sensors, e.g. smoke, movement, water, and various controls, communications, actuators and alarm units, that e.g. will sound an alarm signal, shut a valve, switch of electricity or contact the fire brigade or security using dedicated communication, such as satellite links or fixed lines, or publicly available communication means such as mobile phone systems or the Internet.

The sensors and units are interconnected using dedicated cabling or a dedicated wireless network, in order to avoid configuration problems on general wireless local area networks.

A professional will usually do the installation and configuration of the various units, including programming the control units with the localization of the various sensors, e.g. that sensor number 2 is a water sensor placed close to the dishwasher. An alarm from this sensor could then trigger a valve that closes the water mains and sends a message to the proprietor, rather than contacting the fire brigade.

Thus installation cost is a main contributor to the total cost of a system.

US2008095441A1 discloses a system that uses bar codes for providing a service, where the bar code that identifies the selected service is tagged to a device before point of sale. However no configuration of the service or the device is made.

US7378942 teaches a method for integrating the tasks related to provisioning of a large alarm system, using a single database. This invention does not involve the point of sale applicable for smaller systems for use in homes or small offices. It is also most suitable for large, wired systems.

US7250859 discloses a system where the configuration of the alarm system is automatically uploaded to a central station automation system. In the present invention the system is preconfigured at the point of sale and that information is downloaded to a central system.

US6891838 discloses a system and a method for monitoring reporting and controlling a residential system via a WAN, gateway, RF-transceivers, repeaters and software. US20070100585A1 discloses a system with a number of sensors and alarming using an SNMP module and a CRM system.

W02005/109361 discloses a system and method of using a device that is communicatively disposed between a scanner and a point of sale terminal. The device can be used to process and distinguish between product specific information and item specific information.

US6686838 discloses systems and methods for providing registration at a remote site. The system can include a monitoring module to which devices such as a camera may be connected, to automatically register the camera.

EP1708118 discloses a combination RFID/image reader. A system receives data from the RFID reader and image reader and assembles data received there from and transmits it to a CPU.

### Summary of the invention

In the present invention the system is preconfigured at the point of sale and this configuration information is downloaded to a central system.

A first aspect of the invention is a point of sale device for configuration of house automation. The point of sale device comprises: a reader arranged to read an identity associated with a sensor for home automation; an interface arranged to receive input of installation data of the sensor; and a communication module arranged to send the installation data and associated identity of the sensor to a server.

The term "sensor" is here used in a broad sense for a device that sends or receives signals as part of reporting events or acting on them. Examples are:
● a smoke detector,
● a water detector combined with an actuator that can close a valve and
● a control for regulating temperature.

The reader may be configured to read an identity of a control unit.

The installation data may include data about installation location.

The installation data may include data about installation purpose.

The reader may be arranged to read the identity using bar code reading, RFID or optical character recognition.

The point of sale device may further comprise a writer arranged to write data on a tag associated with the sensor.

A second aspect of the invention is a system for house automation. The system comprises: the point of sale device according to the first aspect, at least one sensor; at least one wireless bridge; the wireless bridge being adapted to be connected to a networked device and to be connected to the sensors; and the server for storing the installation data of the sensor.

One of the at least one sensors may be in the form of an alarm transmitter.

Each of the at least one sensor has a hardware .ID that may be readable by the point of sale device.

The wireless bridge may be in the form of a USB dongle.

The wireless bridge may be arranged to be connected to a broadband home gateway.

The wireless bridge may have a media access control (MAC) address.

The wireless bridge may be arranged to communicate with the sensors in a frequency band around 433 MHz or 870 MHz.

The system may be arranged to encrypt communication between the wireless bridge and the server.

The system may further comprise a machine-to-machine gateway serving as a gateway between a plurality of wireless bridges and one server.

A third aspect of the invention is a method for house automation configuration. The method comprises .the steps of: reading an identity associated with a sensor for home automation; receiving input of installation data of the sensor; and sending the installation data and associated identity of the sensor to a server.

A fourth aspect of the invention is a computer program loadable into the internal memory of a processing unit in a computer based system, comprising software code portions for performing the steps of the third aspect.

A fifth aspect of the invention is a computer program product stored on a computer readable medium, comprising a readable program for causing a processing unit in a computer based system, to control an execution according to the steps of the third aspect.

It is to be noted that, when appropriate, any feature of the first, second, third, fourth or fifth aspect may be applied to other aspects.

The present invention solves the problems of high installation cost, by pre-configuring the system at the point of sale, using barcodes or other methods of unique identification such as RFID on each unit. Such methods are called Automatic Identification and Data Capture (AIDC) and also include shape recognition, magnetic stripes and Optical Character Recognition (OCR). Each unit can then be identified at the point of sale, and its location in the building can be input to a computer. For example, the customer scans a first smoke detector and allocates it to the kitchen, the next smoke detector is scanned and allocated to the living room, then a first water detector is scanned and allocated to the kitchen, the next to the bathroom and so forth. The computer system may have drawings and floor plans of the customer's premises stored; either from public databases, input from the customer or from e.g. the builder. In one embodiment, the point of sale could mean at a time of distribution, at another place than in a shop, e.g. when processing large orders to housing cooperatives.

As the configuration information thus is known to a computer serving the point of sale, this computer may now communicate with a control unit already in place in the customer's building, or await that such a unit is installed, and then communicate the configuration data to this unit.

The control unit may use various forms of communication to the customer, e.g. report incidents and status information by SMS (short message service) or e-mail, or on a dedicated "my page" on the web. Instructions from the user, e.g. to turn on alarm sensors or to regulate heating or cooling, may be performed in a similar way.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### Brief description of the drawings

The invention is now described, by way of example, with reference to the accompanying drawings, in which:
Fig 1 is a block diagram of a preferred implementation of the present invention,
Fig 2 is a sequence diagram of the sales process in a preferred implementation of the present invention, and
Fig 3 is a sequence diagram of the installation process in a preferred implementation of the present invention.

### Detailed description

The present invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

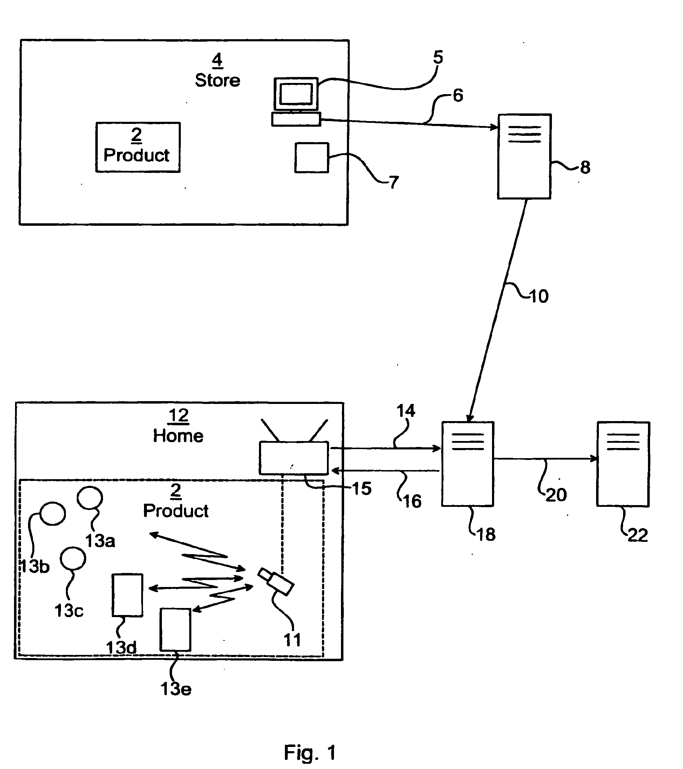

In an embodiment shown in Fig 1, a wireless bridge 11 at the customer's premises 12 is implemented as a USB dongle plugged into a broadband home gateway 15. This dongle 11 may be bought together with sensors 13a-e and may be scanned together with the other parts of the system. The communication between the USB dongle and the various sensors 13a-e does not use a regular wireless LAN service of this unit 15, but rather a proprietary RF system in the 868 MHz band ( or outside Europe the legal frequencies in the 900 MHz ISM band). The sensors 13a-e typically send an alive signal every 20-40 minutes at random intervals in addition to reporting relevant events. Some units, e.g. an automatic valve, may also listen continuously for instruction signals over the same, or a different interface.

Various technologies, such as Bluetooth or Wi-Fi, can be used as communication means between the sensors 13a-e and the home gateway 15. The choice of communication means and frequency bands depends on national regulations and the frequency range needed. In addition there are a number of industry standards that can be used, for example Z-Wave or ZigBee.

Sensors could also be connected to the wireless bridge using wired communication, for example ordinary LAN or communication over the mains. The wireless bridge could use such communication means available from the broadband home gateway 15.

In the embodiment in Fig 1, the customer buys one or more new sensors in a product 2 in a store 4 and subsequently installs the sensors himself, without professional help. The product 2 includes one or more sensors and optionally a wireless bridge. The salesperson in the local store 4 has a graphical user interface of a computer 5 for registration of sensors. Using a reader 7 (e.g. bar code reader or other methods of unique identification such as RFID, shape recognition, magnetic stripes and/or Optical Character Recognition (OCR)), the product is scanned and to obtain identity information of the product 2, such as MAC address for the USB dongle and the hardware (HW) identity for each of the sensors 13a-e. The HW id can be implemented in firmware, but could also be stored in software or e.g. hardcoded in an RFID chip, similar to, but with longer range than, the Hitachi µ-Chip that can wirelessly transmit a 128-bit unique ID number which is hard-coded into the chip as part of the manufacturing process. The term HW id is used for the unique id of the unit, and does not imply that it has to be implemented in hardware. Additionally, the sales person enters, using a user interface of the computer 5, data about installation of the sensors, such as location, purpose of the sensors, etc.

This sensor data is sent to a server 8 for installation data. This server can for example be part of a service provider's Customer Relation System (CRM), e.g. provided by Siebel. A subset of the information is sent 14 to a gateway 18 called m2mGateway (machine-to-machine gateway) that serves a building with several flats and further 20 to a server 22 called "Interview", the House Automation and Alarm Control Centre.

When the customer installs the alarm product, e.g. a new sensor, and connects the USB dongle 11 to the broadband home gateway 15, the USB dongle will communicate with the m2mGateway 18. The communication 14, 16 between the USB dongle and the m2mGateway can be encrypted in order to have sufficient level of security at the internet connection. When the m2mGateway identifies the USB dongle by its MAC address the HW identities for all the sensors 13a-e the customer has bought are retrieved 10 from the installation data server 8 and returned in order for the USB dongle 11 to know which sensors it shall accept. The House Automation and Alarm system is now installed and ready for use. The customer can be informed of the status of the installation e.g. by SMS, e-mail or a LED indicator at the dongle.

The m2mGateway 18 is not required in a system, but is advantageous from a data communication point of view, as it may be configured to aggregate alarm and system information - e.g. if a fire is reported in several flats - this unit 18 may aggregate the individual alarm messages to a single message, thus saving capacity and giving overview in the case of a large event.

The messages can be sent over one or more connections, such as using Internet and/or GSM, if the dongle or the gateway has a GSM module. A back-up battery may be used to provide power in case of power outage or sabotage.

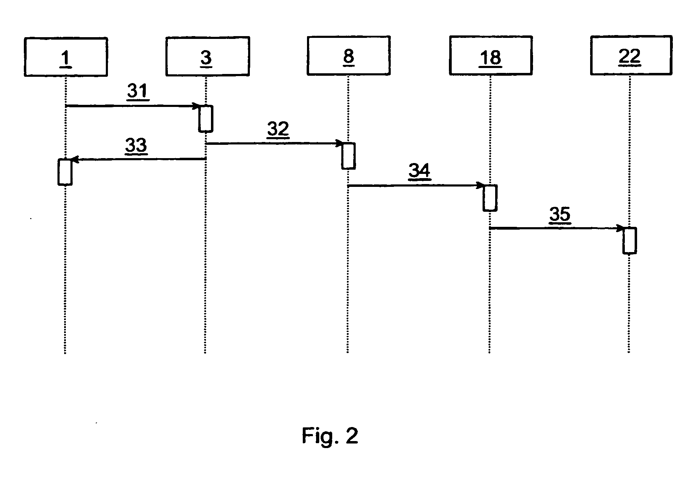

Fig 2 shows the sale process sequence.
31. A customer buys a product comprising a USB dongle, and one or more sensors, such as smoke detectors and water detectors.
32. The salesperson registers customer details and the system equipment. In this embodiment, the boxes for the system equipment have bar codes with a MAC address and HW identities. The data, including the now defined sensor locations, i.e. the customer's premises and when possible where in the customer's premises, such as by the dishwasher, is stored in installation data server 8.
33. The customer can go back home and start the physical installation of the system, placing each sensor at its now defined location.
34. The customer information and the USB dongle MAC address and sensor HW identities are sent to the m2mGateway.
35. The m2mGateway will automatically transfer customer information to the Interview server 22 (House Automation and Alarm Control Centre).

The system is now ready for installation of the registered product.

In an alternative embodiment the sale process also include a large customer with multiple sites, e.g. a housing cooperative. The system configuration in this embodiment is done jointly with distributing the system to all tenants. I.e. the point of sale is distributed and also includes delivery of the system to the end customer. When the order arrives to a warehouse, the units for each apartment are picked from the warehouse shelves, scanned using the present invention and put in a box marked with the apartment number.

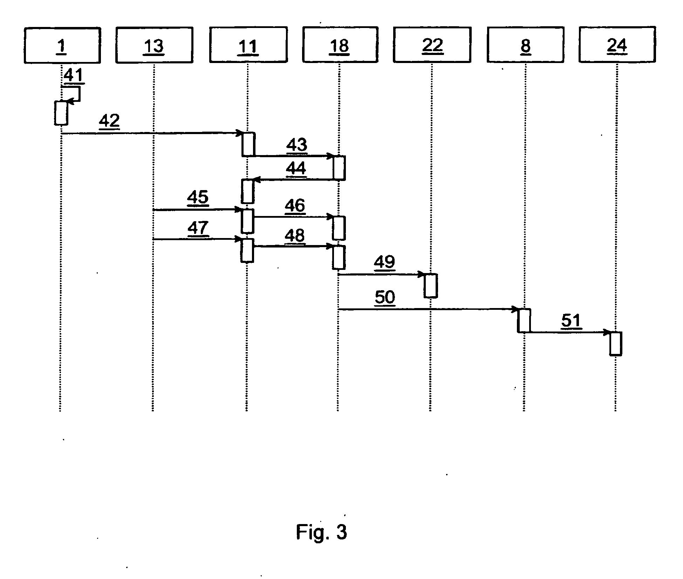

Fig 3 shows the Installation Process Sequence.
41. A customer/installer 1 installs all sensors according to an installation instruction.
42. The customer/installer connects the USB dongle in the broadband home gateway.
43. The USB dongle sends its MAC address to the m2mGateway.
44. The m2mGateway returns a list of HW identities for the sensors to be supported by the system installation.
45. The sensors connect to the USB dongle (periodic supervision signal or similar).
46. The USB dongle reports to the m2mGateway that sensor is connected.
47. Step 45 is repeated for each sensor.
48. Step 46 is repeated for each sensor.
49. When all sensors are reported to be connected, Interview is informed that the concerned system installation is up and running.
50. when all sensors are reported to be connected, Siebel is informed that the concerned system installation is up and running.
51. Billing of the customer can be activated.

In an alternative embodiment, the wireless bridge is a control panel or control centre dedicated for home or office automation,## with or without display and keypad. It is connected via an Ethernet connection to the broadband home gateway, or to an ordinary LAN router, rather than being a USB dongle. In this embodiment a NAT (Network Address Translation) translation functionality is used in order to support 2-way communication. 2-way communication at any time is required for control of devices (e.g. switch on/off power outlets) and for configuration of the system installation. In addition to simple NAT, there can also be a conversion between the various protocols used for automation and sensor communication. As for the dongle implementation, the communication with the optional m2mGateway can be encrypted.

In another alternative embodiment, the wireless bridge is embedded in a broadband home gateway. In this embodiment the control units' functionalities as described, are integrated in the gateway or added as a hardware plug-in, for example using USB. In an alternative embodiment, the point of sale scanner 7 recognizes bar codes and can additionally read serial numbers using OCR. A serial number, e.g. from the production of the unit, is printed on or placed on each unit and read using OCR. In another embodiment the bar code is used to determine the price and type of unit (e.g. USB dongle, fire sensor) and this information is used for the shop inventory and accounting purposes, whereas the identification for the purpose of the present invention is done in a separate scan, using bar code, RFID or OCR to identify the unit being registered. If the present invention is installed later or separate from the other point of sale systems, such as cash registers, it can be difficult to integrate the systems, and two separate scans, or a scanner that connects to both systems, can be used.

In another embodiment active RFID is used for one or more units. Active RFID communication is also used between the control unit, e.g. in a USB dongle, and sensors and actuators with active RFID. RFID tags can both store and transmit data. At the point of sale the unique identification of the unit is not read, but written into its RFID chip. That is, a unique ID suited for the present invention can be added. For example can the system use an ID that includes building, flat and room identity (like Building54Flat23KitchenSmokedetectorl). The RFID may also contain other information for the system, e.g. expected duration of batteries, regular maintenance that is needed, location. In addition the chip may be programmed to communicate with the control unit. The standard ISO/IEC 18000: Information technology - Radio frequency identification for item management describes various implementations possibilities, including the use of the 860-960 MHz band for radio communication, together with other relevant frequencies such as 433 MHz and 2.45 GHz.

### The System, Software and Method

The point of sale device of the present invention consists of one or more computers implementing the system as described in independent claim 1 and the thereto belonging dependent claims.

The method of the present invention consists of the steps as described in independent claim 16 and the there to belonging dependent claims.

The software in the various units in the system of the present invention implements the steps as described in claims 17 and 18.

Here now follows a series of numbered clauses describing various embodiments.
I. System for house automation configuration, consisting of a customer relation system (CRM) server, and a set of one or more entities from the group; a machine-to-machine gateway (m2mgateway), a broadband home gateway and a House Automation Control and Alarm Centre characterized b y that said system consists of:
   at least one sensor,
   at least one control unit,
   at least one identification tag,
   a tag identifier at point of sale.
II. System for house automation configuration according to clause I, **characterized by** that said at least one sensor is in the form of an alarm transmitter.
III. System for house automation configuration according to clause I, **characterized by** that said at least one sensor has a hardware ID.
IV. System for house automation configuration according to clause I, **characterized by** that said at least one control unit is in the form of a USB dongle or a control panel.
V. System for house automation configuration according to clause I, **characterized by** that the control unit is connected to the broadband home gateway.
VI. System for house automation configuration according to clause I, **characterized by** that said control unit has a media access control (MAC) address.
VII. System for house automation configuration as described in clause I, **characterized** b y that said control unit communicates with the sensors in the 433 or 868 MHz band.
VIII. System for house automation configuration as described in clause I, **characterized** b y that the communication between the control unit and the House Automation Control and Alarm Centre is encrypted.
IX. System for house automation configuration described in clause I, **characterized by** that the m2mgateway communicates with at least one control unit.
X. System for house automation configuration as described in clause I, **characterized by** that said at least one sensor is connected to an identification tag
XI. System for house automation configuration as described in clause I, **characterized by** that said at least one control unit is connected to an identification tag.
XII. System for house automation configuration as described in clause X and XI, **characterized by** that said identification tag is unique for every unit.
XIII. System for house automation configuration as described in clause I, **characterized** b y that said identification tag can be in the form of a BAR-code, RFID or Optical Character Recognition.
XIV. System for house automation configuration as described in clause I, **characterized** b y that said identification tag is read.
XV. System for house automation configuration as described in clause I, **characterized** b y that said identification tag is written
XVI. Method for house automation configuration which include at least one identification tag, an identification tag reader, customer relation system (CRM) server, a set of one or more entities from the group; a machine-to-machine gateway (m2mgateway), a broadband home gateway and a House Automation Control and Alarm Centre **characterized by** that:
   at least one sensor is connected to an identification tag,
   at least one control device is connected to an identification tag,
   the CRM registers the control unit's media access control (MAC) address, the sensors' hardware (HW) identities and the customer registration information at point of sale,
   the CRM sends the information to the machine-to-machine gateway (m2mgateway) or broadband home gateway,
   the gateway sends the sensors' HWidentities to the control unit and the customer registration to the House Automation Control and Alarm Centre after establishing a connection with the control unit.
XVII. Method for house automation configuration according to clause XVI **characterized** b y that said identification tag is unique for every unit.
XVIII. Method for house automation configuration according to clause XVI **characterized** b y that the control unit is connected to or embedded in the broadband home gateway.
XIX. Method for house automation configuration according to clause XVI **characterized** b y that said m2mgateway can communicate with several control units.
XX. Method for house automation configuration according to clause XVI **characterized** b y that said m2mgateway upon receiving alarm or system messages from several control units sends one or more aggregated messages to the House Automation Control and Alarm Centre.
XXI. Method for house automation configuration according to clause XVI **characterized** b y that said identification tag is read.
XXII. Method for house automation configuration according to clause XVI **characterized** b y that said identification tag is written.
XXIII. Computer program loadable into the internal memory of a processing unit in a computer based system, comprising software code portions for performing one or more steps of any clause XVI - XXII.
XXIV. Computer program product stored on a computer readable medium, comprising a readable program for causing a processing unit in a computer based system, to control an execution of one or more steps of any clause XVI - XXII.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. Point of sale device (5) for configuration of house automation, comprising:
a reader (7) arranged to read an identity associated with a sensor (13a-e) for home automation;
an interface arranged to receive input of installation data of the sensor; and
a communication module arranged to send the installation data and associated identity of the sensor (13a-e) to a server (8).

2. The point of sale device (5) according to claim 1, wherein the reader (7) is configured to read an identity of a control unit.

3. The point of sale device (5) according to claim 1, wherein the installation data includes data about installation location.

4. The point of sale device (5) according to any one of claims 1 to 3, wherein the installation data includes data about installation purpose.

5. The point of sale device (5) according to any one of claims 1 to 4, wherein the reader (7) is arranged to read the identity using bar code reading, RFID or optical character recognition.

6. The point of sale device (5) according to any one of claims 1 to 5, further comprising a writer arranged to write data on a tag associated with the sensor (13a-e).

7. A system for house automation comprising:
the point of sale device (5) according to any one of claims 1 to 4,
at least one sensor (13a-e);
at least one wireless bridge;
the wireless bridge being adapted to be connected to a networked device and to be connected to the sensors (13a-e); and
the server (8) for storing the installation data of the sensor (13a-e).

8. The system for house automation configuration according to claim 7, wherein one of the at least one sensors (13a-e) is in the form of an alarm transmitter.

9. The system for house automation configuration according to claim 7 or 8, wherein each of the at least one sensors (13a-e) has a hardware ID readable by the point of sale device (5).

10. The system for house automation configuration according to any one of claims 7 to 9, wherein the wireless bridge is in the form of a USB dongle.

11. The system for house automation configuration according to any one of claims 7 to 10, wherein the wireless bridge is arranged to be connected to a broadband home gateway (15).

12. The system for house automation configuration according to any one of claims 7 to 11, wherein the wireless bridge has a media access control, MAC, address.

13. The system for house automation configuration according to any one of claims 7 to 12, wherein the wireless bridge is arranged to communicate with the sensors (13a-e) in a frequency band around 433 MHz or 870 MHz.

14. The system for house automation configuration according to any one of claims 7 to 13, wherein the system is arranged to encrypt communication between the wireless bridge and the server (8).

15. The system for house automation configuration according to any one of claims 7 to 14, further comprising a machine-to-machine gateway (18) serving as a gateway between a plurality of wireless bridges and one server.

16. Method for house automation configuration comprising the steps, carried out by a point of sale device, of:
reading an identity associated with a sensor for home automation;
receiving input of installation data of the sensor;
and
sending the installation data and associated identity of the sensor to a server.

17. Computer program loadable into the internal memory of a processing unit in a computer based system, comprising software code portions for performing the steps of claim 16.

18. Computer program product stored on a computer readable medium, comprising a readable program for causing a processing unit in a computer based system, to control an execution according to the steps of claim 16.

## Patentansprüche

1. Verkaufsstellenvorrichtung (5) zur Konfiguration von Hausautomatisierung, umfassend:
eine Leseeinrichtung (7), die zum Lesen einer Identität angeordnet ist, welche einem Sensor (13a - e) für die Heimautomatisierung zugeordnet ist;
eine Schnittstelle, die zum Empfangen eines Eingangs von Installationsdaten des Sensors angeordnet ist; und
ein Kommunikationsmodul, das zum Senden der Installationsdaten und der zugeordneten Identität des Sensors (13a - e) an einen Server (8) angeordnet ist.

2. Verkaufsstellenvorrichtung (5) gemäß Anspruch 1, wobei die Leseeinrichtung (7) zum Lesen einer Identität einer Steuereinheit konfiguriert ist.

3. Verkaufsstellenvorrichtung (5) gemäß Anspruch 1, wobei die Installationsdaten Daten über einen Installationsort aufweisen.

4. Verkaufsstellenvorrichtung (5) gemäß einem der Ansprüche 1 bis 3, wobei die Installationsdaten Daten über einen Installationszweck aufweisen.

5. Verkaufsstellenvorrichtung (5) gemäß einem der Ansprüche 1 bis 4, wobei die Leseeinrichtung (7) zum Lesen der Identität unter Verwendung von Strichcode-Lesen, RFID oder optischer Zeichenerkennung angeordnet ist.

6. Verkaufsstellenvorrichtung (5) gemäß einem der Ansprüche 1 bis 5, weiterhin eine Schreibeinrichtung umfassend, die zum Schreiben von Daten auf eine dem Sensor (13a - e) zugeordnete Markierung angeordnet ist.

7. System zur Hausautomatisierung, umfassend:
die Verkaufsstellenvorrichtung (5) gemäß einem der Ansprüche 1 bis 4,
wenigstens einen Sensor (13a - e);
wenigstens eine drahtlose Brücke;
wobei die drahtlose Brücke dazu angepasst ist, mit einer vernetzten Vorrichtung verbunden zu sein und mit den Sensoren (13a - e) verbunden zu sein; und
den Server (8) zum Speichern der Installationsdaten des Sensors (13a - e).

8. System zur Hausautomatisierungskonfiguration gemäß Anspruch 7, wobei einer der wenigstens einen Sensoren (13a - e) die Form eines Alarmsenders hat.

9. System zur Hausautomatisierungskonfiguration gemäß Anspruch 7 oder 8, wobei jeder der wenigstens einen Sensoren (13a - e) eine Hardware-Identifikation hat, die durch die Verkaufsstellenvorrichtung (5) lesbar ist.

10. System zur Hausautomatisierungskonfiguration gemäß einem der Ansprüche 7 bis 9, wobei die drahtlose Brücke die Form eines USB-Dongles hat.

11. System zur Hausautomatisierungskonfiguration gemäß einem der Ansprüche 7 bis 10, wobei die drahtlose Brücke dazu angeordnet ist, mit einem Breitband-Heim-Gateway (15) verbunden zu sein.

12. System zur Hausautomatisierungskonfiguration gemäß einem der Ansprüche 7 bis 11, wobei die drahtlose Brücke eine Medienzugriffssteuerungs-, MAC-, - Adresse hat.

13. System zur Hausautomatisierungskonfiguration gemäß einem der Ansprüche 7 bis 12, wobei die drahtlose Brücke dazu angeordnet ist, mit den Sensoren (13a - e) in einem Frequenzband um 433 MHz oder 870 MHz zu kommunizieren.

14. System zur Hausautomatisierungskonfiguration gemäß einem der Ansprüche 7 bis 13, wobei das System dazu angeordnet ist, Kommunikation zwischen der drahtlosen Brücke und dem Server (8) zu verschlüsseln.

15. System zur Hausautomatisierungskonfiguration gemäß einem der Ansprüche 7 bis 14, weiterhin ein Maschine-zu-Maschine-Gateway (18) umfassend, das als Gateway zwischen einer Vielzahl von drahtlosen Brücken und einem Server dient.

16. Verfahren zur Hausautomatisierungskonfiguration, umfassend die durch eine Verkaufsstellenvorrichtung ausgeführten Schritte:
Lesen einer Identität, die einem Sensor für die Heimautomatisierung zugeordnet ist;
Empfangen eines Eingangs von Installationsdaten des Sensors und
Senden der Installationsdaten und der zugeordneten Identität des Sensors an einen Server.

17. Computerprogramm, das in den internen Speicher einer Verarbeitungseinheit in einem computerbasierten System ladbar ist und das Software-Code-Teile zum Durchführen der Schritte aus Anspruch 16 umfasst.

18. Computerprogrammprodukt, das auf einem computerlesbaren Medium gespeichert ist und das ein lesbares Programm zum Bewirken dessen umfasst, dass eine Verarbeitungseinheit in einem computerbasierten System eine Ausführung entsprechend den Schritten aus Anspruch 16 steuert.

## Revendications

1. Dispositif de point de vente (5) pour configuration de domotique, comprenant :
un lecteur (7) agencé pour lire une identité associée à un capteur (13a-e) de domotique;
une interface agencée pour recevoir une entrée de données d'installation du capteur ;
et
un module de communication agencé pour envoyer les données d'installation et
l'identité associée du capteur (13a-e) à un serveur (8).

2. Dispositif de point de vente (5) selon la revendication 1, dans lequel le lecteur (7) est configuré pour lire une identité d'une unité de commande.

3. Dispositif de point de vente (5) selon la revendication 1, dans lequel les données d'installation comprennent des données relatives à l'emplacement d'installation.

4. Dispositif de point de vente (5) selon l'une quelconque des revendications 1 à 3, dans lequel les données d'installation comprennent des données relatives au but d'installation.

5. Dispositif de point de vente (5) selon l'une quelconque des revendications 1 à 4, dans lequel le lecteur (7) est agencé pour lire l'identité par lecture de codes-barres, par RFID ou par reconnaissance de caractères optiques.

6. Dispositif de point de vente (5) selon l'une quelconque des revendications 1 à 5, comprenant en outre un dispositif d'écriture agencé pour écrire des données sur une étiquette associée au capteur (13a-e).

7. Système de domotique comprenant :
le dispositif de point de vente (5) selon l'une quelconque des revendications 1 à 4 ;
au moins un capteur (13a-e) ;
au moins un pont sans fil ;
le pont sans fil étant apte à être connecté à un dispositif en réseau et à être connecté aux capteurs (13a-e); et
le serveur (8) pour stocker les données d'installation du capteur (13a-e).

8. Système de configuration de domotique selon la revendication 7, dans lequel l'un de l'au moins un capteur (13a-e) se présente sous la forme d'un émetteur d'alarme.

9. Système de configuration de domotique selon la revendication 7 ou 8, dans lequel chacun de l'au moins un capteur (13a-e) comporte un identifiant matériel lisible par le dispositif de point de vente (5).

10. Système de configuration de domotique selon l'une quelconque des revendications 7 à 9, dans lequel le pont sans fil se présente sous la forme d'une clé USB.

11. Système de configuration de domotique selon l'une quelconque des revendications 7 à 10, dans lequel le pont sans fil est agencé pour être connecté à une passerelle domestique de bande large (15).

12. Système de configuration de domotique selon l'une quelconque des revendications 7 à 11, dans lequel le pont sans fil comporte une adresse de commande d'accès au support, MAC.

13. Système de configuration de domotique selon l'une quelconque des revendications 7 à 12, dans lequel le pont sans fil est agencé pour communiquer avec les capteurs (13a-e) dans une bande de fréquences autour de 433 MHz ou 870 MHz.

14. Système de configuration de domotique selon l'une quelconque des revendications 7 à 13, dans lequel le système est agencé pour crypter les communications entre le pont sans fil et le serveur (8).

15. Système de configuration de domotique selon l'une quelconque des revendications 7 à 14, comprenant en outre une passerelle machine-machine (18) servant de passerelle entre une pluralité de ponts sans fil et un serveur.

16. Procédé de configuration de domotique, comprenant les étapes, effectuées par un dispositif de point de vente, de :
la lecture d'une identité associée à un capteur de domotique;
la réception d'une entrée de données d'installation du capteur; et
l'envoi des données d'installation et de l'identité associée du capteur à un serveur.

17. Programme informatique pouvant être chargé dans la mémoire interne d'une unité de traitement dans un système basé sur ordinateur, comprenant des portions de code logiciel pour effectuer les étapes de la revendication 16.

18. Produit de programme informatique stocké sur un support lisible par ordinateur, comprenant un programme lisible pour amener une unité de traitement dans un système basé sur ordinateur à commander une exécution selon les étapes de la revendication 16.
